# EUROPÄISCHE PATENTSCHRIFT

(11) **EP 0 402 579 B1**
(45) Veröffentlichungstag und Bekanntmachung des Hinweises auf die Patenterteilung: **04.05.1994**
(21) Anmeldenummer: 90105300.9
(22) Anmeldetag: 21.03.1990
(51) Int. Cl.: C08G 18/65, C08G 59/50

(54) **Härtungsmittel für Epoxidverbindungen**
Curing agents for epoxide compounds
Durcisseurs pour des composés époxydes

(30) Priorität: 12.06.1989 DE 3919128
(43) Veröffentlichungstag der Anmeldung: 19.12.1990
(73) Patentinhaber: RÜTGERSWERKE AKTIENGESELLSCHAFT, 60326 Frankfurt (DE)
(72) Erfinder: Hansen, Achim, Dr., D-4000 Düsseldorf 1 (DE); Mathes, Alfred, Dr., D-4134 Rheinberg 1 (DE); Zehrfeld, Jürgen, Dr., D-4223 Voerde (DE)

(56) Entgegenhaltungen:
- EP-A- 0 084 106
- DE-C- 2 462 791
- US-A- 3 941 753
- US-A- 4 137 276

## Beschreibung

Die Erfindung betrifft neue Härtungsmittel für Epoxidverbindungen, insbesondere Epoxidharze, die zu flexiblen gehärteten Produkten mit guter Chemikalien- und Alterungsbeständigkeit führen. Derartige Härtungsmittel werden in der Fachwelt als flexible Härter bezeichnet.

Aus DE-OS 31 51 592 sind hochwertige flexible Härter bekannt, die durch Umsetzung von Additionsprodukten aus Polyetherurethancarbaminsäurearylestern mit Aminen bzw. Ketiminen hergestellt werden.

Diese Härter besitzen eine Reihe von Nachteilen, die sich aus der Art der zu ihrem Aufbau verwendeten Stoffe und des damit verbundenen Syntheseweges ergeben.

So erfolgt die Herstellung der als Zwischenstufe verwendeten Polyalkylenpolyetherurethanpolyisocyanate durch Umsetzung von di- und/oder polyfunktionellen Polyalkylenpolyetherpolyolen mit ebenfalls di- und/oder polyfunktionellen Isocyanaten. Umsetzung von mehreren di- und/oder polyfunktionellen Verbindungen führen naturgemäß zu einer Vielzahl von Reaktionen und Reaktionsprodukten. Die Folge ist, daß die Härter durch Nebenreaktionen eine höhere Viskosität erhalten, was durch Zusatz von viskositätserniedrigenden Modifizierungsmitteln ausgeglichen werden muß, und daß die Zusammensetzung der Härter von Charge zu Charge variiert. Darüberhinaus bilden sich leicht niedermolekulare Isocyanat-Addukte, die zu einer Verminderung der Elastizität führen können.

Der Anteil an höhermolekularen Komponenten läßt sich zwar durch einen Überschuß an Polyisocyanat bei der Synthese der Zwischenstufe herabsetzen, es verbleibt jedoch in diesem Fall ein erheblicher Anteil an nicht umgesetztem Polyisocyanat in der Reaktionsmischung. Dieser muß entweder destillativ entfernt werden, was besonders wegen der hohen Siedepunkte der üblicherweise verwendeten Polyisocyanate eines erheblichen verfahrenstechnischen Aufwandes bedarf, oder man beläßt diese freien Polyisocyanate in der Reaktionsmischung, was allerdings zu einer weiteren Bildung niedermolekularer Isocyanataddukte und somit zu einer zusätzlichen Verminderung der Elastizität der Formstoffe führen kann.

Außerdem sind die als Zwischenstufen der Synthese erhaltenen Polyetherurethanpolyisocyanate bzw. Polyetherurethancarbaminsäurearylester oftmals hochviskose Stoffe. Dieses erfordert den Einsatz eines Lösungsmittels und erhöhte Reaktionstemperaturen. Das Lösungsmittel ist anschließend destillativ zu entfernen.

Es ist daher Aufgabe der Erfindung, flexible Härter bereitzustellen, die mit Epoxidverbindungen gehärtete Produkte mit mindestens dem gleichen guten Eigenschaftsprofil ergeben, wie mit flexiblen Härtern gemäß DE-OS 31 51 592 gehärtete Epoxidharze, die jedoch eine niedrigere Viskosität haben und deren Eigenschaftsschwankungen bei der chargenweisen Herstellung geringer sind, insbesondere deren elastifizierende Wirkung nicht durch niedermolekulare Addukte reduziert wird.

Die Lösung der Aufgabe erfolgt durch Härtungsmittel gemäß Anspruch 1 und durch Verfahren zu ihrer Herstellung gemäß der Ansprüche 2-4. Die erfindungsgemäßen Härtungsmittel werden zur Herstellung Laminaten, Beschichtungen, Kleb- und Dichtstoffen sowie von flexiblen Formteilen und Flächengebilden gemäß Anspruch 5 verwendet.

Es wurde gefunden, daß man niedrigviskose Härter erhält, die mit Epoxidverbindungen flexible gehärtete Produkte mit guter Chemikalien- und Alterungsbeständigkeit, guten elektrischen und physikalischen Eigenschaften insbesondere mit von Charge zu Charge gleichbleibender guter Elastizität ergeben, wenn man hydroxylgruppenhaltige Ketiminoverbindungen mit Diisocyanatverbindungen umsetzt, deren eine Isocyanatgruppe blockiert ist, und wenn man das erhaltene Addukt mit einem Polyetheramin umsetzt und das dabei entstehende Reaktionsprodukt hydrolysiert. Bei den so hergestellten aminoendständigen Härtern handelt es sich um Polyalkylenpolyethercarbaminsäureurethanamine.

Die so hergestellten aminoendständigen Härter sind helle, niedrig- bis zähviskose (5 - 70 Pa·s) Produkte, die mit Epoxidverbindungen, insbesondere mit Epoxidharzen mit mindestens zwei Epoxidgruppen pro Moleküleinheit im äquimolaren Verhältnis von Amino- und Epoxidgruppen vermischt werden. Die Härtung erfolgt entweder bei Raumtemperatur innerhalb von 24 - 48 h nach dem Vermischen (Verarbeitbarkeitszeit: 1 - 5 h), oder bei erhöhter Temperatur (20 - 40 min bei 120 °C).

Die Herstellung der erfindungsgemäßen Härter erfolgt demnach in drei Reaktionsschritten aus an sich bekannten Vorprodukten:
(1) Umsetzung von hydroxylgruppenhaltigen Ketiminoverbindungen mit Diisocyanatverbindungen, deren eine Isocyanatgruppe blockiert ist. Dabei entsteht selektiv eine Urethanbindung aus der Reaktion der Hydroxylgruppe mit der freien Isocyanatgruppe.
(2) Umsetzung des Reaktionsproduktes aus (1) mit einem Polyetheramin, wobei die Schutzgruppe der 2. Isocyanatgruppe abgespalten wird und sich durch Reaktion der so entstehenden Isocyanatgruppe mit der Aminogruppe eine Harnstoffbindung bildet.
(3) Hydrolyse des Reaktionsproduktes aus (2) unter Aufspaltung der Iminogruppe und damit Freisetzung der primären Aminogruppe.

Als Einsatzprodukte für die Umsetzung (1) werden entweder handelsübliche hydroxylgruppenhaltige Ketimine und partiell blockierte Isocyanate verwendet. Diese Produkte werden in an sich bekannter Weise hergestellt:
Die Ketimine durch Reaktion von Alkanolaminen wie etwa Ethanolamin oder Propanolamin mit Ketonen, wie z. B. Aceton, Methyl-ethylketon oder Methyl-isobutylketon, die partiell blockierten Isocyanate durch Reaktion von Diisocyanaten mit der äquimolaren Menge Isocyanatgruppen blockierender Verbindungen.

Beispiele für Diisocyanate sind:
2,4- und 2,6-Toluylendiisocyanat oder Gemische davon, 4,4-Diphenylmethandiisocyanat, m-Xylylendiisocyanat, 2,2,4-(2,4,4)Trimethylhexamethylendiisocyanat oder 1-Isocyanato-3-isocyanatomethyl-3,5,5-trimethyl-cyclohexan (auch Isophorandiisocyanat genannt). Besonders geeignet sind aliphatische und cycloaliphatische Diisocyanate wie z. B. Hexamethylendiisocyanat und Isophorondiisocyanat.

Isocyanatgruppen blockierende Verbindungen sind solche, die mit Isocyanaten unter Bildung einer labilen Verbindung reagieren, die somit als Schutzgruppe für die Isocyanatgruppe dienen, solange die mit ihnen blockierten Isocyanate in einem Temperaturbereich unterhalb des Zersetzungspunktes des blockierten Isocyanats behandelt werden. Beispiele für derartige blockiertende Verbindungen sind Phenole, Oxime, Lactame, Bisulfit oder CH-acide Verbindungen, bevorzugt jedoch Alkylphenole wie z. B. Nonylphenol.

Die Einsatzprodukte sind in der Regel flüssig. Sie können zur Umsetzung als Reinsubstanz oder in einem Lösemittel gelöst eingesetzt werden. Die Umsetzung erfolgt bei einer Temperatur im Bereich von 40 - 120 °C, bevorzugt bei 60 - 80°C.

Das erhaltene Zwischenprodukt kann ohne weitere Aufarbeitung direkt mit der äquivalenten Menge eines Polyetheramins versetzt werden und reagiert bei Temperaturen im Bereich von 40 - 100 °C, bevorzugt bei 60 - 80 °C innerhalb von ca. 3 h. Polyetheramine sind Verbindungen mit einer Grundkette aus Polyethylenglykol oder Polypropylenglykol und einer oder mehreren primären oder sekundären Aminogruppen, gegebenenfalls gemeinsam mit anderen funktionellen Gruppen wie etwa Amidgruppen. Ihr Molekulargewicht liegt im Bereich von 148 bis etwa 5.000. Zahlreiche derartige Polyetheramine sind unter der Bezeichnung Jeffamine® in der Literatur bekannt und im Handel erhältlich.

Im Anschluß an die Umsetzung mit Polyetheramin wird das Reaktionsgemisch mit der etwa 2 bis 10fachen äquimolaren Menge an Wasser versetzt und etwa 1 bis 5 h bei 80-100 °C gehalten. Dabei wird die Iminogruppe hydrolytisch gespalten. Anschließend werden das überschüssige Wasser, das freigesetzte Keton und die im vorhergehenden Schritt freigesetzte blockierende Verbindung destillativ abgetrennt.

Das verbleibende Produkt ist eine einheitliche, helle Flüssigkeit und ist gebrauchsfertig zum Härten von Epoxidharzen. Dazu werden Epoxidverbindungen und der erfindungsgemäße Härter in etwa äquimolarem Verhältnis von Amino- und Epoxidgruppen miteinander vermischt, innerhalb der Verarbeitungszeit je nach Anwendung verarbeitet und bei Raum- oder erhöhter Temperatur (5 - 140 °C) gehärtet. Das so gehärtete Epoxidharz ist ein flexibles Material mit hochwertigen physikalischen und elektrischen Eigenschaften und guter chemischer Beständigkeit.

Daher finden die erfindungsgemäßen Härtungsmittel, zusammen mit einer oder mehreren Epoxidverbindungen, Verwendung zur Herstellung flexibler Formteile oder Flächengebilde, insbesondere von Laminaten, sowie zur Herstellung von Dicht- und Klebstoffen oder Beschichtungen.

### Beispiele

Der Ausdruck GT bezeichnet Gewichtsteile.

### Beispiel 1 Hydroxyl-Ketimin

61 g Ethanolamin werden mit 144 g Methylethylketon, 300 g Cyclohexan und 0,2 g p-Toluolsulfonsäure am Wasserabscheider unter Rückfluß bis zur Beendigung der Wasserabscheidung (ca. 4 bis 5 Stunden) erhitzt.

Die erhaltene hellgelbe Flüssigkeit besitzt ein OH-Äquivalent von 490 g/Äquiv.

### Beispiel 2 Ketimin-Urethan-Carbaminsäurearylester

87 g 2,4-Toluoldiisocyanat werden mit 110 g Nonylphenol und 0,1 g Dibutylzinndilaurat 3 Stunden bei 60 °C erwärmt. Anschließend werden 253 g des Ketimins aus Beispiel 1 zugegeben und weitere 3 Stunden bei 80 °C erwärmt. Es entsteht ein Ketiminurethancarbaminsäurearylester mit einem verkappten NCO-Äquivalent von 890 g/Äquiv.

### Beispiel 3 Polyetherharnstoffurethanamin

242 g Ketiminurethancarbaminsäurearylester aus Beispiel 2 und 250 g Polypropylenetherdiamin 2000 (Molmasse 2000, Aminwasserstoffäquivalent 500 g/Aquiv.) werden unter Rühren 3 Stunden bei 70 °C erwärmt. Mit 36 g Wasser wird das Ketimin 2 Stunden bei 80 °C hydrolysiert. Lösungsmittel, Keton und Wasser werden anschließend am Rotationsverdampfer entfernt. Dabei entsteht eine flexible Härterkomponente mit einer Viskosität von 25.600 mPa s bei 25 °C und einem Aminäquivalent von 744 g /Äquiv. Diese flexible Stammkomponente ist in den üblichen Lösemitteln löslich und mit Aminen und Epoxidharzen gut mischbar.

### Beispiel 4 Ketimin-Urethan-Carbaminsäurearylester

121 g Isophorondiisocyanat werden mit 110 g Nonylphenol und 0,15 g Dibutylzinndilaurat 3 Stunden bei 60 °C und 2 Stunden bei 80 °C erwärmt. Anschließend werden 253 g Hydroxylketimin aus Beispiel 1 zugegeben und weitere 3 Stunden bei 80 °C erwärmt. Es entsteht ein Ketiminurethancarbaminsäurearylester mit einem verkappten NCO-Äquivalent von 484 g/Äquiv.

### Beispiel 5 Polyetherharnstoffurethanamin

259 g Ketiminurethancarbaminsäurearylester aus Beispiel 4 und 100 g Polypropylenetherdiamin 400 (Molmasse 400, Aminwasserstoffäquivalent 100) werden unter Rühren 2 Stunden bei 60 °C und 1 Stunde bei 80 °C erwärmt. Mit 36 g Wasser wird das Ketimin 2 Stunden bei 80 °C hydrolysiert. Lösungsmittel, Keton und Wasser werden anschließend am Rotationsverdampfer entfernt. Die flexible Härterkomponente hat eine Viskosität von 52.400 mPa s bei 52 °C und ein Aminäquivalent von 344 g/Äquiv. Dieses Produkt ist rückstandslos löslich in aromatischen Lösemitteln, Ketonen, Nonylphenol und aliphatischen und cycloaliphatischen Aminen.

### Beispiel 6

### Härterformulierung:

60 GT Härterkomponente aus Beispiel 3
8 GT Cocosfettamin
11.5 GT m-Xylylendiamin
20.5 GT Nonylphenol
Die Mischung hat ein Aminäquivalent von 200.

100 GT der Härterformulierung werden mit 93 GT Epoxidharz auf der Basis von Bisphenol A und Epichlorhydrin mit einem Epoxidäquivalent von 186 vermischt. Anschließend werden Platten von 4 mm Dicke hergestellt und die Zugfestigkeit nach DIN 53455, die Dehnung nach DIN 53455, der Shore D-Wert nach DIN 53505 und die Weiterreißfestigkeit nach DIN 53515 bestimmt.

| Ergebnisse nach | 24 h/23 °C | 7 d/23 °C |
|---|---|---|
| Zugfestigkeit | 5.3 N/mm² | 7.5 N/mm² |
| Dehnung | 221 % | 171 % |
| Shore D | 29 | 44 |
| Weiterreißfestigkeit | 22 N/mm | 34 N/mm |

### Beispiel 7

### Härterformulierung:

60 GT Härterkomponente aus Beispiel 3
10.6 GT Stearyamin
11.5 GT m-Xylylendiamin
17.9 GT Diisopropylnaphthalin
Die Mischung hat ein Aminäquivalent von 200.

100 GT der Härterformulierung werden mit 93 GT Epoxidharz auf der Basis von Bisphenol A und Epichlorhydrin mit einem Epoxidäquivalent von 186 vermischt. Anschließend werden Platten von 4 mm Dicke hergestellt und die Zugfestigkeit nach DIN 53455, die Dehnung nach DIN 53455, der Shore D-Wert nach DIN 53505 und die Weiterreißfestigkeit nach DIN 53515 bestimmt.

| Ergebnisse nach | 24 h/23 °C | 7 d/23 °C |
|---|---|---|
| Zugfestigkeit | 3.5 N/mm² | 5.6 N/mm² |
| Dehnung | 299 % | 179 % |
| Shore D | 17 | 24 |
| Weiterreißfestigkeit | 15 N/mm | 26 N/mm |

### Beispiel 8

### Härterformulierung:

60 GT Härterkomponente aus Beispiel 3
8 GT Cocosfettamin
11.5 GT m-Xylylendiamin
11 GT Nonylphenol
9.5 GT Dibutylphthalat
Die Mischung hat ein Aminäquivalent von 200.

100 GT der Härterformulierung werden mit 93 GT Epoxidharz auf der Basis von Bisphenol A und Epichlorhydrin mit einem Epoxidäquivalent von 186 vermischt. Anschließend werden Platten von 4 mm Dicke hergestellt und die Zugfestigkeit nach DIN 53455, die Dehnung nach DIN 53455, der Shore D-Wert nach DIN 53505 und die Weiterreißfestigkeit nach DIN 53515 bestimmt.

| Ergebnisse nach | 7 d/23 °C |
|---|---|
| Zugfestigkeit | 6.7 N/mm² |
| Dehnung | 206 % |
| Shore D | 32 |
| Weiterreißfestigkeit | 32 N/mm |

### Beipiel 9

### Härterformulierung:

55 GT Härterkomponente aus Beispiel 5
16.2 GT N-Aminoethylpiperazin
28.8 GT Nonylphenol
Die Mischung hat ein Aminäquivalent von 186.

100 GT der Härterformulierung werden mit 100 GT Epoxidharz auf der Basis von Bisphenol A und Epichlorhydrin mit einem Epoxidäquivalent von 186 vermischt. Anschließend werden Platten von 4 mm Dicke hergestellt und die Zugfestigkeit nach DIN 53455, die Dehnung nach DIN 53455, der Shore D-Wert nach DIN 53505 und die Weiterreißfestigkeit nach DIN 53515 bestimmt.

| Ergebnisse nach | 7 d/23 °C |
|---|---|
| Zugfestigkeit | 12.3 N/mm² |
| Dehnung | 97 % |
| Shore D | 53 |
| Weiterreißfestigkeit | 43 N/mm |

## Patentansprüche

1. Härtungsmittel für Epoxidverbindungen, hergestellt durch Umsetzung bei einer Temperatur im Bereich von 40 bis 120 °C von hydroxylgruppenhaltigen Ketiminoverbindungen, mit Diisocyanatverbindungen, deren eine Isocyanatgruppe blockiert ist, Umsetzung des erhaltenen Addukts mit einer Verbindung mit einer Grundkette aus Polyethylenglykol oder Polypropylenglykol und einer oder mehreren primären oder sekundären Aminogruppen, ggf. gemeinsam mit anderen funktionellen Gruppen, deren Molekulargewicht im Bereich von 148 bis 5 000 liegt, bei Temperaturen im Bereich von 40 bis 100 °C und anschließende Hydrolyse des entstandenen Reaktionsproduktes durch Versetzen mit der 2 bis 10-fachen äquimolaren Menge an Wasser und 1 bis 5-stündiges Halten der Mischung bei 80 bis 100 °C.

2. Verfahren zur Herstellung von Härtungsmitteln nach Anspruch 1, dadurch gekennzeichnet, daß äquivalente Mengen hydroxylgruppenhaltiger Ketiminoverbindungen und Diisocyanatverbindungen, deren eine Isocyanatgruppe blockiert ist, bei einer Temperatur im Bereich von 40 bis 120 °C miteinander umgesetzt werden, das erhaltene Addukt mit der äquivalenten Menge einer Verbindung mit einer Grundkette aus Polyethylenglykol oder Polypropylenglykol und einer oder mehreren primären oder sekundären Aminogruppen, ggf. gemeinsam mit anderen funktionellen Gruppen, deren Molekulargewicht im Bereich von 148 bis 5 000 liegt, bei Temperaturen im Bereich von 40 bis 100 °C umgesetzt wird, das entstehende Reaktionsprodukt durch Versetzen mit der 2 bis 10-fachen äquimolaren Menge an Wasser und 1 bis 5-stündiges Halten der Mischung bei 80 bis 100 °C hydrolysiert und das so erhaltene Härtungsmittel destillativ gereinigt wird.

3. Verfahren nach Anspruch 2, dadurch gekennzeichnet, daß die hydroxylgruppenhaltige Ketiminoverbindung ein Umsetzungsprodukt von Ethanolamin mit äquimolaren Mengen Methyl-isobutylketon ist.

4. Verfahren nach Anspruch 2, dadurch gekennzeichnet, daß die Isocyanatverbindung ein Addukt aus Isophorondiisocyanat und der äquimolaren Menge Nonylphenol ist.

5. Verwendung der Härtungsmittel nach Anspruch 1, zusammen mit einer oder mehreren Epoxidverbindungen zur Herstellung flexibler Formteile oder Flächengebilde, von Laminaten, Klebstoffen, Beschichtungen oder Dichtstoffen.

## Claims

1. Hardening agents for epoxide compounds, produced by reaction, at a temperature within the range of 40 to 120°C, of ketimine compounds containing a hydroxyl group, and diisocyanate compounds with one isocyanate group being blocked, reaction of the adduct obtained with a compound having a main chain of polyethylene glycol or polypropylene glycol, and one or a plurality of primary or secondary amine groups, optionally together with other functional groups, the said compound being of a molecular weight within the range of 148 to 5000, at temperatures within the range of 40 to 100°C, and subsequent hydrolysis of the resulting reaction product by mixing with two to ten times the equimolar quantity of water, and maintaining the mixture at 80 to 100°C for one to five hours.

2. A process for the manufacture of hardening agents in accordance with claim 1, **characterised in that** equivalent amounts of ketimine compounds containing a hydroxyl group, and diisocyanate compounds with one isocyanate group blocked, are reacted with one another at a temperature within the range of 40 to 120°C, and the adduct obtained is reacted with the equivalent amount of a compound having a main chain of polyethylene glycol or polypropylene glycol, and one or a plurality of primary or secondary amine groups, optionally together with another functional group, the said compound being of a molecular weight within the range of 148 to 5000, at temperatures within the range of 40 to 100°C, and the resulting reaction product is hydrolysed by mixing with two to ten times the equimolar quantity of water, and the mixture is kept at 80 to 100°C for one to five hours, and the hardening agent thus obtained is purified by distillation.

3. A process in accordance with claim 2, **characterised in that** the ketimine compound containing a hydroxyl group is a reaction product of ethanolamine with an equimolar amount of methyl isobutyl ketone.

4. A process in accordance with claim 2, **characterised in that** the isocyanate compound is an adduct of isophorone diisocyanate and the equimolar amount of nonylphenol.

5. Use of the hardening agents in accordance with claim 1, together with one or a plurality of epoxide compounds, to produce flexible moulded parts or surface materials from laminates, adhesives, coatings and sealants.

## Revendications

1. Durcisseurs pour composés époxydes, obtenus par réaction de composés cétimino hydroxylés avec des composés diisocyanates dont un groupe isocyanate est bloqué, à une température se situant dans la plage de 40 à 120°C, par réaction du produit d'addition résultant avec un composé comportant une chaîne de base constituée de polyethylèneglycol ou de polypropylèneglycol et d'un ou de plusieurs groupes amino primaires ou secondaires, éventuellement en commun avec d'autres groupes fonctionnels dont le poids moléculaire se situe dans la gamme de 148 à 5000, à des températures dans la plage de 40 à 100°C et par hydrolyse subséquente du produit de réaction résultant par addition d'une quantité 2 à 10 fois équimolaire d'eau et maintien du mélange pendant 1 à 5 heures entre 80 et 100°C.

2. Procédé de préparation de durcisseurs selon la revendication 1, caractérisé en ce que l'on fait réagir ensemble des quantités équivalentes de composés cétimino hydroxylés et de composés diisocyanates dont un groupe isocyanate est bloqué, à une température dans la plage de 40 à 120°C, que l'on fait réagir le produit d'addition obtenu avec la quantité équivalente d'un composé possèdant une chaîne de base constituée de polyethylèneglycol ou de polypropylèneglycol et d'un ou de plusieurs groupes amino primaires ou secondaires, éventuellement en commun avec d'autres groupes fonctionnels dont le poids moléculaire se situe dans la gamme de 148 à 5000, à des températures dans la plage de 40 à 100°C, qu'on hydrolyse le produit de réaction résultant par addition de la quantité 2 à 10 fois équimolaire d'eau et maintien du mélange pendant 1 à 5 heures entre 80 et 100°C at que l'on purifie par distillation le durcisseur ainsi obtenu.

3. Procédé selon la revendication 2, caractérisé en ce que le composé cétimino hydroxylé est un produit de réaction d'éthanolamine avec des quantités équimolaires de méthylisobutylcétone.

4. Procéde selon la revendication 2, caractérisé en ce que le composé isocyanate est un produit d'addition d'isophoronediisocyanate et de la quantité équimolaire de nonylphénol.

5. Utilisation des durcisseurs selon la revendication 1, conjointement avec un ou plusieurs composés époxydes pour la fabrication de pièces moulées souples ou de structures planes, de stratifiés, d'adhésifs, de revêtements ou de produits d'étanchéité.
